# EUROPEAN PATENT SPECIFICATION

(11) **EP 2 354 995 B1**
(45) Date of publication and mention of the grant of the patent: **28.12.2016**
(21) Application number: 10001290.5
(22) Date of filing: 09.02.2010
(51) Int. Cl.: G06F 21/00

(54) **Software licensing in a virtual computing environment**
Softwarelizenzierung in einer virtuellen Rechnerumgebung
Concession de licence de logiciel dans un environnement informatique virtuel

(43) Date of publication of application: 10.08.2011
(73) Proprietor: Siemens Aktiengesellschaft, 80333 München (DE)
(72) Inventor: Rathore, Pushpraj, Electronic city post 560100 Bangalore (IN)
(74) Representative: Isarpatent

(56) References cited:
- EP-A2- 1 674 965
- US-A- 5 745 879
- US-A1- 2009 006 257
- US-A1- 2009 006 862
- US-A1- 2009 249 494
- US-A1- 2009 328 225
- US-B1- 7 313 512

## Description

The present invention relates to software licensing, and in particular, to software licensing in an emulated or virtual computing environment.

In an emulated or virtual computing environment, a host computer system, having a CPU and an operating system (OS), runs an emulator program that allows the host computer to emulate the instructions of an unrelated type CPU and/or operating system, called a guest computer system. When a guest computer is thus emulated on a host computer system, the guest computer system is said to be a virtual machine, as the guest computer system exists only as a software representation of the operation of the hardware architecture of the emulated guest computer system. The terms "virtual computing" and "emulated computing" are thus used interchangeably to denote the ability of a virtual machine to mimic the hardware architecture of an entire computer system. In this context, a "real machine" or a "real computer system" refers to a computer system having a CPU having corresponding real hardware architecture.

If a software application is being installed with license manager in a virtual machine running on a real host machine, then it would install successfully on said virtual machine with licenses being transferred thereto. However thereafter, images of this virtual machine can be transferred to any number of host computers along with the same license, making it possible to transfer the license to the OS of these host computers. As a result, the software application may work on several computers using the same license. It is thus possible for a user to run the software application on any machine with the same duplicated license.

An example of a software license enforcement mechanism for an emulated computing environment is disclosed in United States patent no. 7,313,512 discloses. Herein, a license key server is provided in the host computer system for monitoring the initiation of unlicensed software, including operating system software, in the guest computer system. A determination is made by the license key server as to whether additional a license is available for each unlicensed software application. If a license is available, a license is granted and the count of available licenses is decremented. If a license is not available, a license is not granted and the unlicensed software application in the guest computer system is disabled.

The publication US 2009/0328225 A1 - Chambers et al. "System and method for enforcing software license compliance with virtual machines" shows an architecture, in which a license module installed on a virtual machine communicates via an hypervisor with policy control files installed directly on a hardware.

The object of the present invention is to provide simpler solution for licensed execution of a software program in an emulated or virtual computing environment, to prevent duplicating of the license of said software program.

The above object is achieved by the method according to claim 1, the system according to claim 7 and the computer program product according to claim 13.

The underlying idea of the present invention is to prevent duplicating of a license of a software program installed on a virtual machine by installing a license manager associated with the software program on a real machine, and not on said virtual machine. The license manager is not transferred to the virtual machine but is accessed from the real machine by the software program executing on the virtual machine. This prevents transfer of the license manager to other computers when images of said virtual machine are transferred to these computers.

In one embodiment, said software program and said license manager are bundled in a block of software, wherein said method further comprises installing at least a portion of said block of software on a host computer system by:
- detecting whether said host computer system is a virtual machine, and
- upon detection of a virtual machine, aborting installation of said license manager on the detected virtual machine and carrying out said installation of said software program on said virtual machine.

This automatically prevents the license manager of the software program from being installed on the virtual machine, while the software program, which is bundled in the same software block, is installed on the virtual machine.

In an exemplary further embodiment, to effectively detect the host computer system, said detection is based on a registry value of a peripheral hardware of said host computer system.

In a contemplated scenario, said virtual machine operates on said real machine.

In an exemplary embodiment, accessing said license manager comprises establishing a connection between said real machine and said virtual machine through a network port. This allows the license manager to be installed to any real machine that is connected to the virtual machine over a network,

In one embodiment, in order to allow the software program on the virtual machine to access the license manager on the real machine the proposed method comprises installing said license manager in a shared location on said real machine that is accessible by said virtual machine.

The present invention is further described hereinafter with reference to illustrated embodiments shown in the accompanying drawings, in which:
FIG 1 schematically represents a bundled block of software comprising a software program and an associated license manager,
FIG 2 schematically represents a system for licensed execution of a software program in a virtual computing environment, in accordance with one embodiment of the present invention,
FIG 3 is an exemplary screenshot depicting registry value of a peripheral device of a virtual machine,
FIG 4 illustrates a dialog box allowing establishment of a connection between a real machine and a virtual machine through a network port, and
FIG 5 is a flowchart illustrating an exemplary method for licensed execution of a software program in a virtual computing environment.

Embodiments of the present invention solve the aforementioned problem of preventing duplicating of licenses of software applications installed on to a virtual machine, by installing the software application on to a virtual machine and a license manager associated with the software program on to a real machine. The license manager is not transferred to the virtual machine but is accessed from the real machine by the software program executing on the virtual machine. This prevents transfer of the license manager to other computers when images of said virtual machine are transferred to these computers.

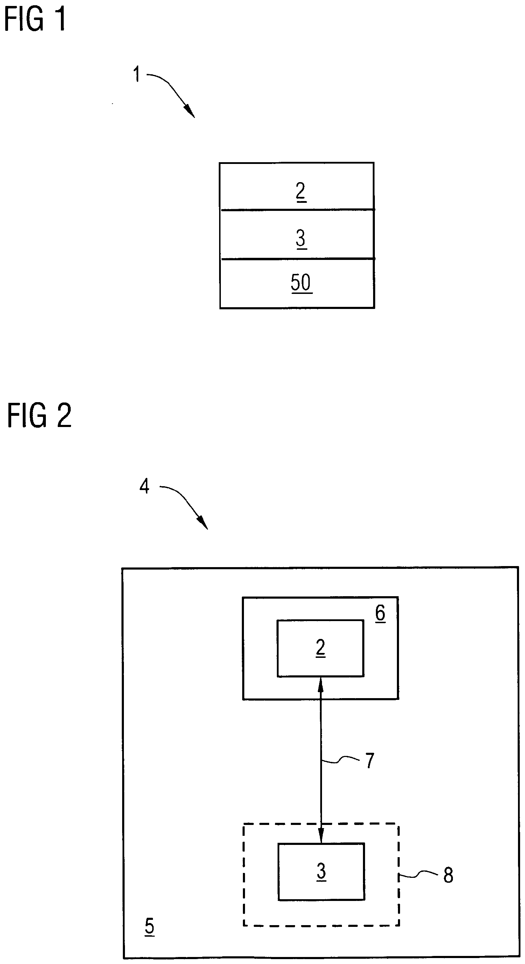

FIG 1 illustrates an example scenario in which a software application (program) 2 and its associated license manager 3 is bundled into one block of software 1. The software block 1, is typically a software product deliverable by software vendor, to be installed and executed in recipient host computer systems, which may be real or virtual machines. The software block 1 may be delivered to the host computer system, for example via electronic data carriers such as CDs, DVD, memory cards, flash memory, and the like, or by transmission via a network such as Internet. It should be noted that more than one software application (program) may be bundled into the software block 1. The license manger 3 is a software tool that allows license information, for example, license type and license passwords, to be validated based on information located on the encaptionment certificate(s) shipped with the software product, i.e., the software block 1. In addition, the software block 1 may also comprise installation and execution code 50, which carries out the installation and execution of the one or more software programs 2 on to the host computer system.

FIG 2 illustrates an exemplary system 4 for providing licensed execution of the one or more software programs 2 in a virtual computing environment. In the context of this discussion, the he term "real machine" or a "real computer system" refers to a computer system having a CPU having real hardware architecture, while the term "virtual machine" refers to a software representation of the operation of the hardware architecture and/or OS of the a computer system, that is emulated on a host real computer system. The system 4 in FIG 2 includes a virtual machine 6 operating on a host computer system 5, which is a real machine. In accordance with the present invention, the one or more software programs 2 are installed on to the virtual machine 6, while the license manager 3 is installed on the real machine 5, which is host to the virtual machine 6. To that end, in one embodiment, during execution of the software block 1 on the virtual machine 6, a check is performed to detect whether the host computer system to which the software block 1 is installed, is a real machine or a virtual machine. If the host computer system for the software block 1 is detected to be a virtual machine, as it is in this case, installation of the license manager 3 is aborted and only the installation of the one or more software programs is/are carried out.

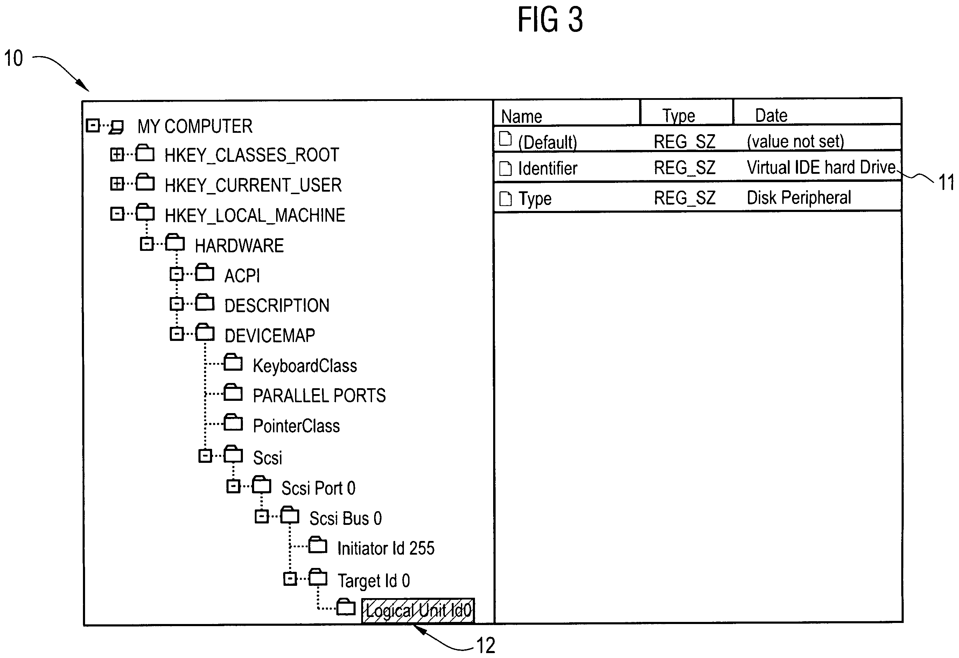

In an exemplary embodiment, the check to detect whether the host computer system is a virtual machine comprises checking a registry value of a peripheral hardware of the host computer system. FIG 3 shows an exemplary screenshot 10 depicting registry value 11 of a peripheral device (hard drive in this case) of the host computer system, which is a virtual machine in the present scenario. The registry value 11, which may be obtained from a predefined hierarchical location 12 in the virtual machine. In this example, the registry value contains an identifier that indicates that the peripheral hardware is an emulated or virtual hardware, whereby it is determined that the host computer system is a virtual machine.

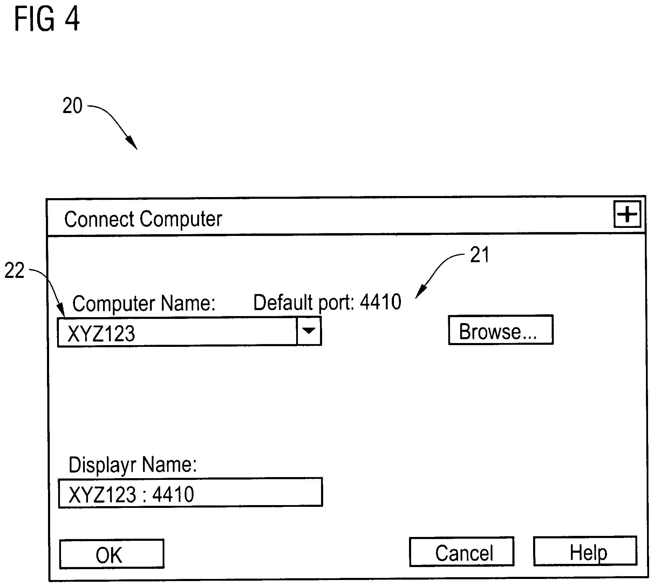

Referring back to FIG 2, in the illustrated embodiment, the license manager 3 is installed on the real machine 5 hosting the virtual machine 6. During execution of the one or more software programs 2 by the virtual machine 6, the license manager 3 is accessed by the one or more software programs 2 running on the virtual machine 6 from the real machine 5 by establishing a communication 7 between the real machine 5 and the virtual machine. In an exemplary embodiment, the communication 7 takes place via a network port. FIG 4 illustrates an exemplary dialog box 20 generated during installation of the one or more software programs 2 on the virtual machine. In the dialog box 20, the name/address 22 of the real machine and the network port 21 are specified wherein a connection is established between the virtual machine and the specified real machine, through the specified port. To that end, referring back to FIG 2, the license manager 3 may be installed on a shared location 8 on the real machine 5, for example, a shared folder, that is accessible by the virtual machine 6, for example, through power user rights.

In an alternate embodiment, instead of being installed on the real machine 5 on which the virtual machine operates, the license manager 3 may be installed on any other real machine, that is accessible to the virtual machine 6, for example, via network ports as discussed above.

Once the license manager 3 on the real machine 5 is accessed by the one or more software programs 2 on the virtual machine 6, the license information, for example, license type and license passwords, are validated by the one or more software programs 2 based on information located on the encaptionment certificate(s) shipped with the software block 1, thus providing licensed execution of the one or more software programs 2 on the virtual machine 6.

As can be seen, the license manager 3 is not transferred to the virtual machine 6 but is only accessible from the real machine by the software program 2 executing on the virtual machine 6. This prevents transfer of the license manager to other computers when images of the virtual machine 6 are transferred to these computers.

In the illustrated embodiment, the installation and execution of a software program 2 on the virtual machine 6 are carried out by the installation and execution code 50 contained in the software block 1. Accordingly, in accordance with one aspect, the present invention may be embodied as computer program product 1 having program code 50 therein, for installation and execution of a software application on a host computer system. The computer program product 1 may be contained, for example, on electronic data carriers such as computer readable media such as CDs, DVD, memory cards, flash memory, and the like. Alternately, the computer program product 1 may be embodied as data files transferable to the host computer system via a network such as Internet.

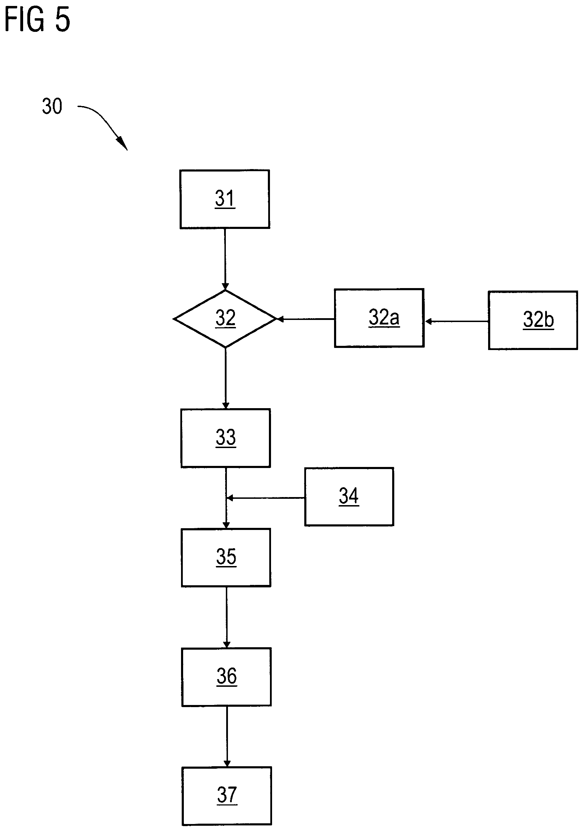

FIG 5 is a flowchart illustrating an exemplary sequence 30 of steps carried out by a program code in accordance with said aspect of the present invention. Herein, block 31 involves the initiation of the installation of the software block in a host system. At block 32, a check is made to detect whether the host computer system to which the software block is being installed is a real or a virtual machine. As mentioned before, block 32 may comprise, for example, checking the registry value of a peripheral hardware of the host computer system. At block 32, if it is detected that the host system for the software block is a real machine, the software program and the license manager installed normally on the detected real machine (block 32a), wherein the execution of the software program is carried out subsequently (block 32b) by validating license information using the license manager installed on the detected real machine. However, at block 32, if it is detected that the host computer system for the software block is a virtual machine, then at block 33, the installation of the license manager on the virtual machine is aborted, while only the software program in the software block is installed on the virtual machine. At block 35, the license manager is installed on to a real machine, for example, the host machine on which the virtual machine operates. The installation and execution code may be adapted to install the license manager on to the real machine concurrently with the installation of the software block on the virtual machine, or subsequent to the installation of the software block on the virtual machine.

At block 35, execution the software program on the virtual machine is initiated. Subsequently, at block 36, a communication is established between the virtual machine and the real machine o which the license manager is installed, for example via a network port, to wherein the software program executing on the virtual machine is able to access the license manager installed on the real machine. Finally, at block 37, the license information for the software program is obtained using the license manager.

Although the invention has been described with reference to specific embodiments, this description is not meant to be construed in a limiting sense. Various modifications of the disclosed embodiments, as well as alternate embodiments of the invention, will become apparent to persons skilled in the art upon reference to the description of the invention. It is therefore contemplated that such modifications can be made without departing from the scope of the present invention as defined by the below-mentioned patent claims.

## Claims

1. A method for providing licensed execution of a software program (2) in a virtual computing environment, comprising:
- installing said software program (2) on a virtual machine (6),
- installing a license manager (3) associated with said software program (2) on a real machine (5), and
- executing said software program (2) on said virtual machine (6) by accessing said license manager (3) installed on said real machine (5),
wherein said software program (2) and said license manager (3) are bundled in a block of software (1),
**characterized in,**
**that** said method further comprises installing at least a portion of said block of software (1) on a host computer system by:
- detecting whether said host computer system is a virtual machine (6), and
- upon detection of a virtual machine, aborting installation of said license manager (3) on the detected virtual machine (6) and carrying out said installation of said software program (2) on said virtual machine (6).

2. The method according to claim 1, wherein said detection is based on a registry value (11) of a peripheral hardware of said host computer system.

3. The method according to any of the preceding claims, wherein said virtual machine (6) operates on said real machine (5).

4. The method according to any of the preceding claims, wherein accessing said license manager (3) comprises establishing a connection (7) between said real machine (5) and said virtual machine (6) through a network port (21).

5. The method according to any of the preceding claims, comprising installing said license manager (3) in a shared location (8) on said real machine (5) that is accessible by said virtual machine (6).

6. A system (4) for providing licensed execution of a software program (2) in a virtual computing environment, comprising:
- a virtual machine (6), having said software program (2) installed thereon,
- a real machine (5), having a license manager (3) associated with said software program (2) installed thereon, and
- means for executing said software program (2) on said virtual machine (6) by accessing said license manager (3) installed on said real machine (5),
wherein said software program (2) and said license manager (3) are bundled in a block of software (1),
**characterized in,**
**that** said system (4) further comprises means for installing at least a portion of said block of software (1) on a host computer system by:
- detecting whether said host computer system is a virtual machine (6), and
- upon detection of a virtual machine (6), aborting installation of said license manager (3) on the detected virtual machine (6).

7. The system (4) according to claim 6, wherein said means for executing said software program (2) on said virtual machine (6) by accessing said license manager (3) installed on said real machine (5) further comprises means for establishing a connection (7) between said real machine (5) and said virtual machine (6) through a network port (21).

8. The system (4) according to any of claims 6 or 7, wherein said license manager (3) is installed in a shared location (8) on said real machine (5) that is accessible by said virtual machine (6).

9. The system (4) according to any of claims 6 to 8, wherein said detection is based on a registry value (11) of a peripheral hardware of said host computer system.

10. A computer program product, comprising computer readable program code (50) embodied therein, said program code (50) comprising:
- code adapted for installing a software program (2) on a virtual machine (6),
- code adapted for installing a license manager (3) associated with said software program (2) on a real machine (5), and
- code adapted for executing said software program (2) on said virtual machine (6) by accessing said license manager (3) installed on said real machine (5),
wherein said software program (2) and said license manager (3) are bundled in a block of software (1),
**characterized in,**
**that** said computer program code further comprises code adapted for installing at least a portion of said block of software (1) on a host computer system by:
- detecting whether said host computer system is a virtual machine (6), and
- upon detection of a virtual machine, aborting installation of said license manager (3) on the detected virtual machine (6) and carrying out said installation of said software program (2) on said virtual machine (6).

11. The computer program product according to claim 10, wherein said code adapted for accessing said license manager (3) is further adapted for establishing a connection (7) between said real machine (5) and said virtual machine (6) through a network port (21).

## Patentansprüche

1. Verfahren zum Bereitstellen einer lizenzierten Ausführung eines Softwareprogramms (2) in einer virtuellen Computerumgebung, das Folgendes umfasst:
- Installieren des Softwareprogramms (2) auf einer virtuellen Maschine (6),
- Installieren eines Lizenzmanagers (3), der dem Softwareprogramm (2) zugeordnet ist, auf einer realen Maschine (5) und
- Ausführen des Softwareprogramms (2) auf der virtuellen Maschine (6) durch Zugreifen auf den Lizenzmanager (3), der auf der realen Maschine (5) installiert ist,
wobei das Softwareprogramm (2) und der Lizenzmanager (3) in einem Softwareblock (1) gebündelt sind,
**dadurch gekennzeichnet,**
**dass** das Verfahren ferner das Installieren mindestens eines Anteils des Softwareblocks (1) auf einem Host-Computersystem durch Folgendes umfasst:
- Detektieren, ob das Host-Computersystem eine virtuelle Maschine (6) ist, und
- dann, wenn eine virtuelle Maschine detektiert wird, Abbrechen der Installation des Lizenzmanagers (3) auf der detektierten virtuellen Maschine (6) und Durchführen der Installation des Softwareprogramms (2) auf der virtuellen Maschine (6).

2. Verfahren nach Anspruch 1, wobei die Detektion auf einem Registrierungswert (11) eines Peripheriegeräts des Host-Computersystems basiert.

3. Verfahren nach einem der vorhergehenden Ansprüche, wobei die virtuelle Maschine (6) auf der realen Maschine (5) arbeitet.

4. Verfahren nach einem der vorhergehenden Ansprüche, wobei das Zugreifen auf den Lizenzmanager (3) das Herstellen einer Verbindung (7) zwischen der realen Maschine (5) und der virtuellen Maschine (6) durch einen Netz-Port (21) umfasst.

5. Verfahren nach einem der vorhergehenden Ansprüche, das das Installieren des Lizenzmanagers (3) an einem gemeinsamen Ort (8) auf der realen Maschine (5), auf den die virtuelle Maschine (6) zugreifen kann, umfasst.

6. System (4) zum Bereitstellen einer lizenzierten Ausführung eines Softwareprogramms (2) in einer virtuellen Computerumgebung, das Folgendes umfasst:
- eine virtuelle Maschine (6), auf der das Softwareprogramm (2) installiert ist,
- eine reale Maschine (5), die einen Lizenzmanager (3), der dem Softwareprogramm (2), das darauf installiert ist, zugeordnet ist, besitzt, und
- Mittel zum Ausführen des Softwareprogramms (2) auf der virtuellen Maschine (6) durch Zugreifen auf den Lizenzmanager (3), der auf der realen Maschine (5) installiert ist, wobei das Softwareprogramm (2) und der Lizenzmanager (3) in einem Softwareblock (1) gebündelt sind,
**dadurch gekennzeichnet,**
**dass** das System (4) ferner Mittel zum Installieren mindestens eines Anteils des Softwareblocks (1) auf einem Host-Computersystem durch Folgendes umfasst:
- Detektieren, ob das Host-Computersystem eine virtuelle Maschine (6) ist, und
- dann, wenn eine virtuelle Maschine (6) detektiert wird, Abbrechen der Installation des Lizenzmanagers (3) auf der detektierten virtuellen Maschine (6).

7. System (4) nach Anspruch 6, wobei die Mittel zum Ausführen des Softwareprogramms (2) auf der virtuellen Maschine (6) durch Zugreifen auf den Lizenzmanager (3), der auf der realen Maschine (5) installiert ist, ferner Mittel zum Herstellen einer Verbindung (7) zwischen der realen Maschine (5) und der virtuellen Maschine (6) durch einen Netz-Port (21) umfassen.

8. System (4) nach einem der Ansprüche 6 oder 7, wobei der Lizenzmanager (3) an einem gemeinsamen Ort (8) auf der realen Maschine (5), auf den die virtuelle Maschine (6) zugreifen kann, installiert ist.

9. System (4) nach einem der Ansprüche 6 bis 8, wobei die Detektion auf einem Registrierungswert (11) eines Peripheriegeräts des Host-Computersystems basiert.

10. Computerprogrammprodukt, das computerlesbaren Programmcode (50), der darin enthalten ist, umfasst, wobei der Programmcode (50) Folgendes umfasst:
- einen Code, der zum Installieren eines Softwareprogramms (2) auf einer virtuellen Maschine (6) ausgelegt ist,
- einen Code, der zum Installieren eines dem Softwareprogramm (2) zugeordneten Lizenzmanagers (3) auf einer realen Maschine (5) ausgelegt ist, und
- einen Code, der zum Ausführen des Softwareprogramms (2) auf der virtuellen Maschine (6) durch Zugreifen auf den Lizenzmanager (3), der auf der realen Maschine (5) installiert ist, ausgelegt ist,
wobei das Softwareprogramm (2) und der Lizenzmanager (3) in einem Softwareblock (1) gebündelt sind,
**dadurch gekennzeichnet,**
**dass** der Computerprogrammcode ferner einen Code umfasst, der zum Installieren mindestens eines Anteils des Softwareblocks (1) auf einem Host-Computersystem durch Folgendes ausgelegt ist:
- Detektieren, ob das Host-Computersystem eine virtuelle Maschine (6) ist, und
- dann, wenn eine virtuelle Maschine detektiert wird, Abbrechen der Installation des Lizenzmanagers (3) auf der detektierten virtuellen Maschine (6) und Durchführen der Installation des Softwareprogramms (2) auf der virtuellen Maschine (6).

11. Computerprogrammprodukt nach Anspruch 10, wobei der Code, der zum Zugreifen auf den Lizenzmanager (3) ausgelegt ist, ferner zum Herstellen einer Verbindung (7) zwischen der realen Maschine (5) und der virtuellen Maschine (6) durch einen Netz-Port (21) ausgelegt ist.

## Revendications

1. Procédé permettant l'exécution sous licence d'un programme logiciel (2) dans un environnement informatique virtuel, comprenant :
- l'installation dudit programme logiciel (2) sur une machine virtuelle (6),
- l'installation d'un gestionnaire de licence (3) associé audit programme logiciel (2) sur une machine réelle (5), et
- l'exécution dudit programme logiciel (2) sur ladite machine virtuelle (6) en sollicitant ledit gestionnaire de licence (3) installé sur ladite machine réelle (5), dans lequel ledit programme logiciel (2) et ledit gestionnaire de licence (3) sont regroupés dans un bloc de logiciel (1),
**caractérisé en ce que** ledit procédé comprend en outre l'installation d'au moins une partie dudit bloc de logiciel (1) sur un système informatique hôte en :
- détectant que ledit système informatique hôte est ou non une machine virtuelle (6), et
- à la détection d'une machine virtuelle, abandonnant l'installation dudit gestionnaire de licence (3) sur la machine virtuelle détectée (6) et exécutant ladite installation dudit programme logiciel (2) sur ladite machine virtuelle (6).

2. Procédé selon la revendication 1, dans lequel la détection est basée sur une valeur de registre (11) d'un matériel périphérique dudit système informatique hôte.

3. Procédé selon l'une quelconque des revendications précédentes, dans lequel ladite machine virtuelle (6) fonctionne sur ladite machine réelle (5).

4. Procédé selon l'une quelconque des revendications précédentes, dans lequel la sollicitation dudit gestionnaire de licence (3) comprend l'établissement d'une connexion (7) entre ladite machine réelle (5) et ladite machine virtuelle (6) par le biais d'un port réseau (21).

5. Procédé selon l'une quelconque des revendications précédentes, comprenant l'installation dudit gestionnaire de licence (3) dans un emplacement partagé (8) sur ladite machine réelle (5) qui est accessible par ladite machine virtuelle (6).

6. Système (4) permettant l'exécution sous licence d'un programme logiciel (2) dans un environnement informatique virtuel, comprenant :
- une machine virtuelle (6) sur laquelle est installé ledit programme logiciel (2),
- une machine réelle (5) sur laquelle est installé un gestionnaire de licence (3) associé audit programme logiciel (2), et
- un moyen d'exécution dudit programme logiciel (2) sur ladite machine virtuelle (6) en sollicitant ledit gestionnaire de licence (3) installé sur ladite machine réelle (5),
dans lequel ledit programme logiciel (2) et ledit gestionnaire de licence (3) sont regroupés dans un bloc de logiciel (1),
**caractérisé en ce que** ledit système (4) comprend en outre un moyen d'installation d'au moins une partie dudit bloc de logiciel (1) sur un système informatique hôte en :
- détectant que ledit système informatique hôte est une machine virtuelle ou non (6), et
- à la détection d'une machine virtuelle (6), abandonnant l'installation dudit gestionnaire de licence (3) sur la machine virtuelle détectée (6).

7. Système (4) selon la revendication 6, dans lequel ledit moyen d'exécution dudit programme logiciel (2) sur ladite machine virtuelle (6) en sollicitant ledit gestionnaire de licence (3) installé sur ladite machine réelle (5) comprend un moyen d'établissement d'une connexion (7) entre ladite machine réelle (5) et ladite machine virtuelle (6) par le biais d'un port réseau (21).

8. Système (4) selon l'une quelconque des revendications 6 ou 7, dans lequel ledit gestionnaire de licence (3) est installé dans un emplacement partagé (8) sur ladite machine réelle (5) qui est accessible par ladite machine virtuelle (6).

9. Système (4) selon l'une quelconque des revendications 6 à 8, dans lequel ladite détection est basée sur une valeur de registre (11) d'un matériel périphérique dudit système informatique hôte.

10. Produit de programme informatique, comprenant un code de programme lisible par ordinateur (50) intégré à celui-ci, ledit code de programme (50) comprenant :
- un code adapté pour installer un programme logiciel (2) sur une machine virtuelle (6),
- un code adapté pour installer un gestionnaire de licence (3) associé audit programme logiciel (2) sur une machine réelle (5), et
- un code adapté pour exécuter ledit programme logiciel (2) sur ladite machine virtuelle (6) en sollicitant ledit gestionnaire de licence (3) installé sur ladite machine réelle (5),
dans lequel ledit programme logiciel (2) et ledit gestionnaire de licence (3) sont regroupés dans un bloc de logiciel (1),
**caractérisé en ce que** ledit code de programme informatique comprend en outre un code adapté pour installer au moins une partie dudit bloc de logiciel (1) sur un système informatique hôte en :
- détectant que ledit système informatique hôte est ou non une machine virtuelle (6), et
- à la détection d'une machine virtuelle, abandonnant l'installation dudit gestionnaire de licence (3) sur la machine virtuelle détectée (6) et exécutant ladite installation dudit programme logiciel (2) sur ladite machine virtuelle (6).

11. Produit de programme informatique selon la revendication 10, dans lequel ledit code adapté pour solliciter ledit gestionnaire de licence (3) est adapté en outre pour établir une connexion (7) entre ladite machine réelle (5) et ladite machine virtuelle (6) par le biais d'un port réseau (21).
